# EUROPÄISCHE PATENTSCHRIFT

(11) **EP 1 708 969 B1**
(45) Veröffentlichungstag und Bekanntmachung des Hinweises auf die Patenterteilung: **03.10.2018**
(21) Anmeldenummer: 05700312.1
(22) Anmeldetag: 17.01.2005
(51) Int. Cl.: C03B 33/023, G02B 7/00

(54) **VERFAHREN ZUR HERSTELLUNG VON FARBRADSEGMENTEN**
METHOD FOR THE PRODUCTION OF COLOR WHEEL SEGMENTS
PROCEDE DE FABRICATION DE SEGMENTS DE ROUES A COULEURS

(30) Priorität: 20.01.2004 US 537726 P
(43) Veröffentlichungstag der Anmeldung: 11.10.2006
(73) Patentinhaber: Oerlikon Surface Solutions AG, Pfäffikon, 8808 Pfäffikon (CH)
(72) Erfinder: MAISSEN, Clau, CH-9477 Trübbach (CH)
(86) Internationale Anmeldenummer: PCT/CH2005/000017
(87) Internationale Veröffentlichungsnummer: WO 2005/068382

(56) Entgegenhaltungen:
- DE-A1- 3 400 843
- DE-A1- 10 016 628
- GB-A- 647 714
- IT-B- 1 240 961
- SU-A1- 1 159 901
- US-B1- 6 253 995
- US-B1- 6 598 977
- PATENT ABSTRACTS OF JAPAN Bd. 1997, Nr. 06, 30. Juni 1997 (1997-06-30) -& JP 09 045119 A (SUZUKI GLASS TEC:KK), 14. Februar 1997 (1997-02-14)

## Beschreibung

Die Erfindung bezieht sich auf Farbräder für Projektionsapparate sowie ein Herstellungsverfahren für Farbräder.

Die vorliegende Erfindung betrifft ein Farbrad wie es bei der sequentiellen Farbbilderzeugung bei Projektionsgeräten zur Anwendung kommt. Ein solches Farbrad kann auf einem scheibenförmigen Glassubstrat durch Beschichtung und Strukturierung hergestellt werden. Insbesondere der Strukturierungsprozess ist jedoch teuer. In der Praxis werden daher meistens Kreisringteile zu einem Farbrad zusammengefügt. Zu dessen Herstellung werden typischerweise Kreisringteile aus dichroitischen Platten vereinzelt und auf eine zur Rotation vorgesehene Scheibe derart fixiert dass die äußeren Bereiche der Kreisringteile über den Scheibenrand hinausragen und die äußeren Kreisringteilkanten einen Kreisring bilden. In der Anwendung wird das so entstandene Farbrad in den optischen Strahlengang eines Beleuchtungsstrahls platziert, der entsprechend der optischen Charakteristika des sich aktuell im Strahlengang befindlichen Kreisringsegments beispielsweise wellenlängenabhängig transmittiert und/oder reflektiert wird. Wird das Rad in Rotation versetzt so kann sequentielle Farbabfolge realisiert werden.

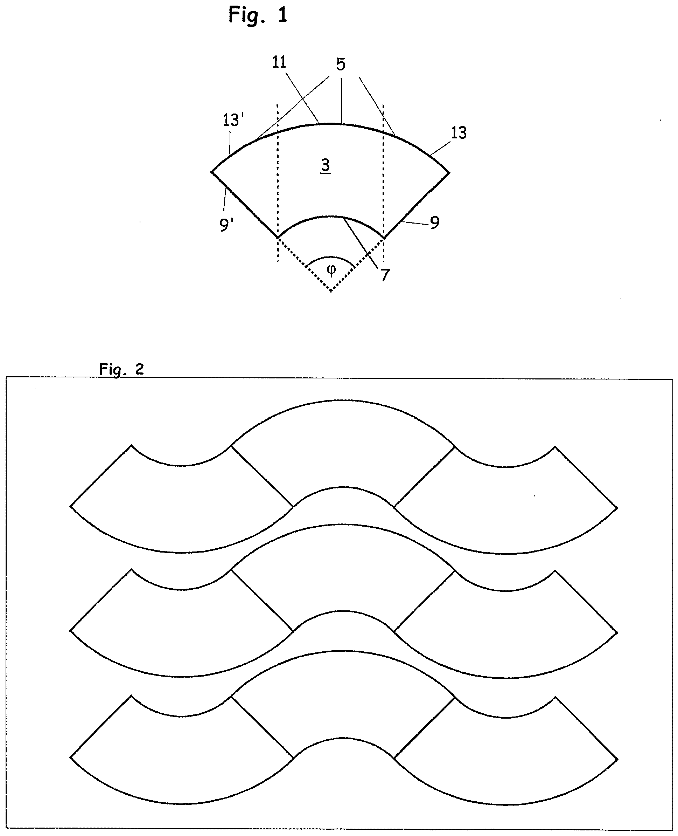

Die vorliegende Erfindung betrifft ausserdem ein Verfahren zur Herstellung der für ein Farbrad benötigten Kreisringteile. Um die vorliegende Erfindung besser beschreiben zu können werden zunächst einige geometrische Grössen hinsichtlich der Kreisringteile definiert und benannt; siehe dazu Figur 1. Ein standardmäßiges Kreisringteil 3 (KRT) ist umgrenzt durch eine äussere Kreisbogenkante 5, eine innere Kreisbogenkante 7 sowie zwei radiale Kanten 9,9' die den Zentriwinkel ϕ einschliessen und die jeweils senkrecht auf äusserer und innerer Kreisbogenkante 5,7 stehen. Für die Zwecke der vorliegenden Erfindung wird die äussere Kreisbogenkante 5 in einen zentralen Kreisbogenteil 11 und zwei Flankenkreisbogenteile 13 und 13' eingeteilt und zwar derart, dass die Sehne auf das zentrale Kreisbogenteil 11 die gleiche Länge wie die Sehne auf die innere Kreisbogenkante 7 ist und außerdem die beiden Flankenkreisbogenteile 13,13' gleich lang sind.

Es ist generell nicht möglich eine zweidimensionale Fläche vollständig lückenlos mit gleichartigen Kreisbogenteilen zu belegen. Dies bedeutet aber, dass bei der Vereinzelung solcher Kreisbogenteile aus Plattenmaterial zwingend Material nicht genutzt werden kann, d.h. Verlustflächen entstehen und damit eine Materialausbeute kleiner 100% gegeben ist. Das Plattenmaterial ist in der Regel mittels teurer Verfahren vorbehandelt. Beispielsweise werden solche Platten für Farbräder zunächst mittels Vakuumverfahren beschichtet. Die Materialausbeute sollte daher möglichst hoch gehalten werden. Ein Faktor, der bei der Vereinzelung der Kreisringteile die Materialausbeute weiter verringert ist die Tatsache, dass abhängig vom Verfahren, mit dem das Plattenmaterial zu Kreisringteilen vereinzelt wird, die einzelnen Kreisringteile mehr oder weniger beabstandet sein müssen, um saubere und reproduzierbare Kanten erzielen zu können. Ein weit verbreitetes Verfahren zu Vereinzelung von Substraten aus Glassplatten ist die Methode des Ritzens und Brechens (R&B-Methode). Dabei wird zunächst die Oberfläche des Plattenmaterials entlang einer Sollbruchkante angeritzt und anschliessend das Glas gebrochen. Es muss zu beiden Seiten entlang der geritzten Linie genügend Material vorhanden sein um die für das Brechen notwendigen Kräfte derart an das Werkstück ansetzen zu können, dass der Bruch tatsächlich entlang der Sollbruchkante erfolgt. Genügend Material bedeutet in dem Zusammenhang mindestens das dreifache der zu brechenden Glasdicke. Bei einer Glasdicke von 1mm würde das bedeuten, dass diese Kreisringteile jeweils mindestens 3mm Abstand zum benachbarten Kreisringteil über den gesamten Umfang einhalten müssen, sofern die Kreisringteile keine gemeinsamen Bruchkanten umfassen.

Um die Ausbeute zu erhöhen wird daher versucht, die mittels Vereinzelung herauszuschneidenden Substrate derart auf dem Plattenmaterial, aus dem sie gewonnen werden sollen, anzuordnen, dass möglichst viele gemeinsame Bruchkanten entstehen. Dies ist natürlich sehr stark abhängig von der zu erzielenden Geometrie der zu erzielenden vereinzelten Teile. Für identische Kreisringteile gibt es zunächst lediglich die Möglichkeit eine radiale Kante eines ersten Kreisringteils an einer radialen Kante eines weiteren Kreisringteils anzuordnen. Wird die Orientierung der Krümmungen der Kreisringteile gegeneinander ausgerichtet, so lassen sich jeweils an den freien radialen Kanten weitere Kreisringteile anordnen, sofern es sich nicht um nahezu vollständig geschlossene Kreisringteile handelt und sofern die Plattengröße dies zuläßt. Die Kreisringteile bilden dann ein Band in der Form einer Schlangenlinie. Im folgenden wird dieses Verfahren daher als Schlangen-Methode bezeichnet.

Eine andere Möglichkeit gemeinsame Schnittkanten und damit eine bessere Ausbeute zu erzielen ist dann gegeben, wenn es die Anwendung zuläßt zu einem modifizierten Kreisringteil überzugehen. So zum Beispiel beim beschriebenen Farbrad, bei dem typischerweise der innere Bereich der Kreisringteile lediglich zur mechanischen Fixierung verwendet wird, die Form der inneren Kreisbogen-Kante kann dabei durchaus variiert werden.
Ein vorteilhaft modifiziertes Kreisringteil umfasst eine innere Kante, deren Krümmung derjenigen der äusseren Kreisbogenkante angepasst ist. In diesem Fall können die Kreisringteile so angeordnet werden dass die innere Kreisbogen-Kante 7 eines Kreisringteils eine gemeinsame Bruchkante mit dem zentralen Teil 11 der äusseren Kreisbogen-Kante 5 eines weiteren Kreisringteils bilden. Die Kreisringteile bilden dann Kolonnen in denen sie übereinander angeordnet. Dieses Verfahren wird daher im folgenden als Kolonnen-Methode bezeichnet.

Mit der Kolonnen-Methode, d.h. mit der Anpassung der inneren Kreisbogen-Kante ist lediglich ein kleiner Teil des Umfangs Teil einer gemeinsamen Sollbruchkante zur Vermeidung von Materialverlusten. Für den Rest des Umfangs muss weiterhin mindestens der dreifache Abstand zur Bruchkante hinzugegeben werden um vernünftig brechen zu können. Da das für die Vereinzelung verwendete Plattenmaterial meist vor der Vereinzelung mittels teurer Beschichtungsverfahren vorbehandelt ist, hat dieser Materialverlust noch wie vor grossen Einfluss auf die Herstellungskosten.

Es ist die Aufgabe der vorliegenden Erfindung eine Lösung anzugeben die die Nachteile des Stand der Technik überwindet.

Die reine Kombination der Schlangenlinien-Methode und der Kolonnenmethode funktioniert nicht: Der Fachmann, der ausgehend von der Schlangen-Methode versucht die Schlangen enger aneinander zu setzen wird daran scheitern, dass Teilabschnitte der äusseren Kreisringteil-Kanten nebeneinander zu liegen kommen, deren Krümmung unterschiedliches Vorzeichen hat, diese also keine gemeinsame Bruchkante bilden können, selbst wenn die Gestaltung der inneren Kreisringteilkante relativ frei ist.

Der Fachmann, der versucht ausgehend von der Kolonnen-Methode gemäß der Schlangen-Methode die radialen Bruchkanten einer Kolonne an die radialen Bruchkanten einer weiteren Kolonne zu legen wird daran scheitern, dass sich dann die Kreisringteile überlappen.

Die Aufgabe wird erfindungsgemäß dadurch gelöst, dass Schlangen-Methode und Kolonnen-Methode derart modifiziert werden, dass eine Kombination möglich ist. Ausgehend von der Anordnung gemäß der Kolonnen-Methode wird zunächst die Orientierung der Krümmung der Kreisringteile benachbarter Kolonnen abgewechselt. Dadurch ist es bereits möglich die Kolonnen, unter Berücksichtigung des für die Vereinzelung notwendigen Abstandes näher zusammen zu rücken als bei der ursprünglichen Kolonnenmethode. Die Kolonnen sind dann leicht verzahnt. In einem weiteren Schritt werden die Kolonnen jeweils so versetzt, dass eine engere Verzahnung möglich ist. Dies sollte soweit gehen, dass Teile der radialen Bruchkanten benachbarter Kolonnen gemeinsame Bruchkanten bilden. Die Kolonnen sind dann ineinander eng verzahnt. Die Bestandteile der radialen Bruchkanten und der äußeren Kreisbogenbruchkante, die nicht mit anderen Kreisringteilen gemeinsame Bruchkanten bilden, umschließen zusammen mit jeweils 3 weiteren Kreisringteilen eine resultierende Verlustfläche, die nicht genutzt werden kann. Um eine möglichst hohe Materialausbeute zu erzielen, sollte diese Fläche minimiert werden, wobei aber die Anforderungen des Verfahrens eingehalten werden müssen und auch können. Beispielsweise muss das R&B-Verfahren mindestens das dreifache der Plattendicke eingehalten werden.

Eine besonders vorteilhafte Ausführung der vorliegenden Erfindung ist dann möglich, wenn die Anwendung es zulässt, die äussere Kreisbogenkante des Kreisringteils zu modifizieren. Dann ist es möglich, die Kolonnen sehr eng zu verzahnen und die modifizierten Kreisringteile lassen sich ausschliesslich mit gemeinsamen Bruchkanten auf dem Plattenmaterial anordnen, so dass keinerlei zu entfernende Verlustfläche entsteht.

Die Erfindung wird nun anhand der Figuren und anhand unterschiedlicher Ausführungsformen beispielhaft erläutert.
Figur 1 zeigt ein Kreisringteil schematisch dargestellt
Figur 2 zeigt die Anordnung der Kreisringteile auf einem Plattenmaterial gemäß der Schlangen-Methode
Figur 3 zeigt die Anordnung der Kreisringteile auf einem Plattenmaterial gemäß der Kolonnen-Methode
Figur 4 zeigt die Anordnung der Kreisringteile auf einem Plattenmaterial gemäß einer ersten Ausführungsform der Erfindung
Figur 5 zeigt beispielhaft schematisch an einer Platte wie die Bruchkanten verlaufen können
Figur 6 zeigt die Anordnung von Kreisringteilen mit einer Ausführung der modifizierten äusseren Bruchkante derart, dass keine Verlustflächen entstehen
Figur 7 zeigt eine weitere erfindungsgemäße Ausführung, wobei die Länge der radialen Kanten dem des ursprünglichen Kreissegmentes entsprechen.
Figur 8 zeigt eine weiter Ausführungsart
Figut 9 zeigt eine Ausführungsarm mit lediglich geradlinigen Teilbruchkanten.

Schlangenmethode und Kolonnenmethode lassen sich also nur dann kombinieren wenn der erfinderische Schritt gemacht wird, die Aneinanderlegung der radialen Bruchkanten nur teilweise zu vollziehen. Hierzu gibt es im wesentlichen zwei Möglichkeiten: i) die Aneinanderlegung der radialen Bruchkanten nur soweit vollzogen, dass absichtlich eine Verlustfläche entsteht, die gerade groß genug ist um die Vereinzelungsmethode (wie z.B. die R&B-Methode) anwenden zu können. ii) es wird zu einem Kreisringteil übergegangen mit modifizierter äusserer Kreisbogenkante.

### zu i) Beispiel einer minimierten Verlustfläche

Im Beispiel sollen Kreisringteile aus Plattenmaterial mit einer Stärke von 1mm gewonnen werden. Im Beispiel ist das Plattenmaterial eine mit einem Farbfilter beschichtete Glasplatte für ein Farbrad. Die zu gewinnenden Kreisringteile haben eine äussere Kreisbogenkante mit Krümmungsradius 40mm. Der Zentriwinkel beträt 90°. Die radialen Kanten haben eine Länge von jeweils 22mm. Die Anwendung im Farbrad läßt zu, dass die Krümmung der inneren Kreisbogenkante der Krümmung der äusseren Kreisbogenkante angepasst ist.

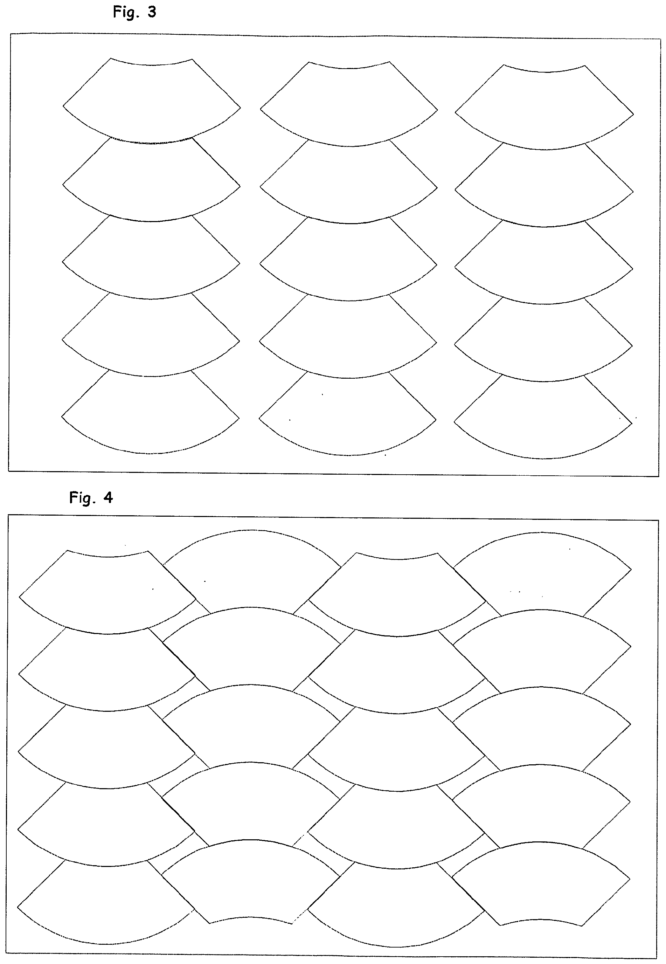

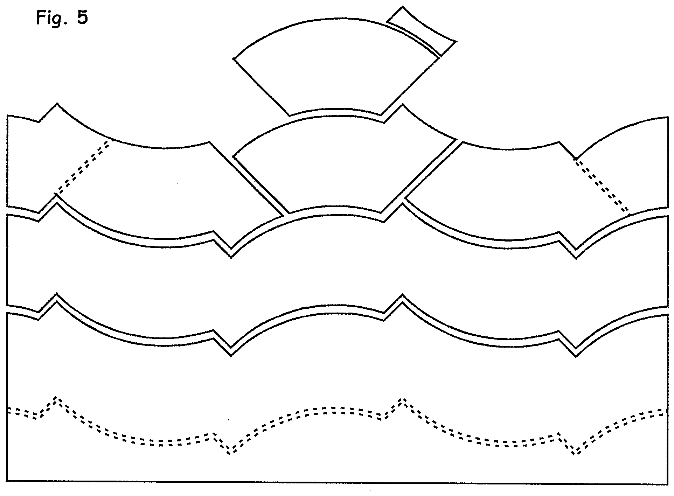

Im erfindungsgemäßen werden auf der Glasplatte gemäß der Kolonnenmethode Kreisringteile dicht angeordnet wobei die Orientierung der Krümmung der Kreisringteile zweier benachbarter Kolonnen entgegengesetztes Vorzeichen hat. Die radialen Kanten der Kreisringteile benachbarter Kolonnen werden derart aneinandergelegt, dass tatsächlich mit lediglich 15.5mm ihrer Gesamtlänge von 22mm aneinander zu liegen kommen. Die restlichen 6.5mm der radialen Kante grenzen nicht an ein weiteres Kreisringteil. Die Figur 4 zeigt schematisch das Ergebnis der Anordnung. Aus der Glasplatte werden zunächst modifizierte Schlangenbänder ausgeschnitten. Die Figur 5 zeigt in Ebenen die unterschiedlichen Schritte der Vereinzelung. Die unterste Ebene stellt die Glasplatte dar in deren unteren Bereich eine Sollbruchkante mittels gestrichelter Linie angedeutet ist. Darüberliegend ist ein bereits entlang der Sollbruchkante gebrochenes Schlangenband dargestellt. Wiederum in der darüberliegenden Ebene ist ein weiterer Vereinzelungsschritt vollzogen: Gezeigt ist ein Kreisringteil mit noch vorhandener Verlustfläche. Die Bruchkanten für weitere Kreisringteile in derselben Ebene sind lediglich gestrichelt dargestellt. Eine Ebene darüber ist ein vollständig vereinzeltes Kreisringteil und davon separiert die Verlustfläche dargestellt. Die Verlustfläche ist tailliert und an ihrer schmalsten Stelle mehr als 3mm breit und damit mehr als das vierfache der Plattendicke. Damit konnte sie einfach und zuverlässig von dem Kreisringteil mittels der R&B-Methode separiert werden.

### ii) modifiziertes Kreisringteil

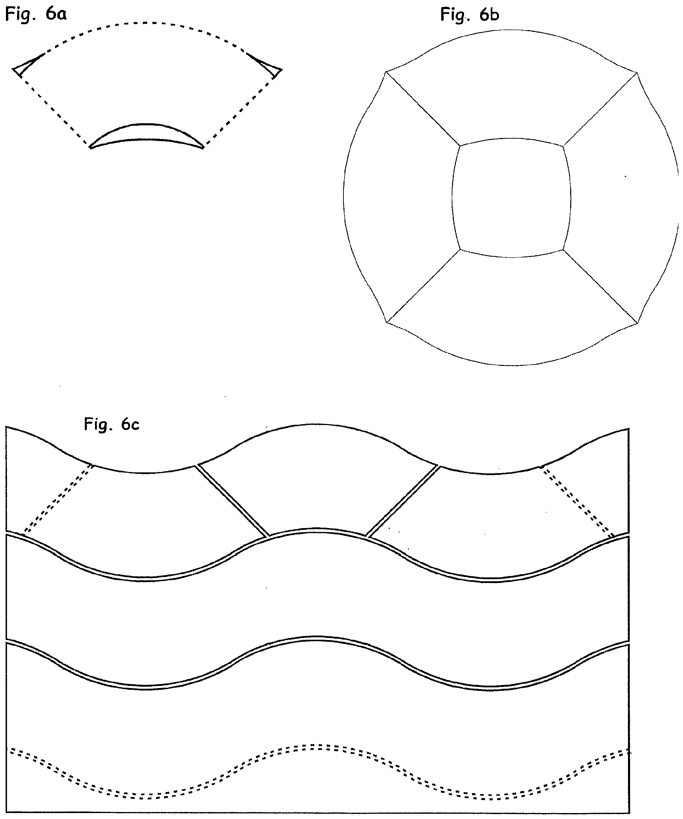

Die Erkenntnis, dass für die optische Anwendung eines Farbrades die Geometrie der äusseren Umrandung letztlich unerheblich ist, kann vorteilhaft für die Herstellung ausgenutzt werden. Die Figur 6a zeigt ein Kreisringteil mit modifizierter äusserer Kreisbogen-Kante. Die gestrichelten Bereiche entsprechen dem ursprünglichen Kreisringteil. Die mit durchgezogener Linie umrandeten Flächen zeigen die Bestandteile die im Vergleich zum ursprünglichen Kreisringteil hinzugekommen sind. Die Figur 6b zeigt schematisch ein aus solchen modifizierten Kreisringteilen zusammengesetztes Rad. In Figur 6c sind anhand einer Glasplatte in unterschiedlichen Ebenen dargestellt die einzelnen Schritte der Vereinzelung. Zunächst wird aus der Glasplatte ein Schlangenlinienband gebrochen. Der noch nicht gebrochene Zustand ist in der untersten Ebene mittels gestrichelter Linie dargestellt. Das herausgebrochene Band ist eine Ebene darüber dargestellt. In der obersten Ebene dargestellt sind die Bruchkanten entlang der radialen Kanten. Für ein Kreisringteil wurde der Bruch vollständig vollzogen während er andere Kreisringteile lediglich die Sollbruchkanten gestrichelt eingezeichnet sind. Hierbei entstehen keinerlei Verlustflächen. Ausserdem ist die eckenfreie Geometrie der Bruchkanten für die R&B-Methode sehr vorteilhaft, was sich direkt auf die Ausbeute auswirkt.

In der Figur 6a wird deutlich, dass durch diese Herstellungsmethode die radialen Kanten verlängernde Fortsätze umfassen. Werden lediglich flächenmäßig identische Kreisringteile zu einem Farbrad zusammengefügt so ist dies kein Problem. In Regel werden allerdings Kreisringteile mit unterschiedlichen Zentriwinkeln zusammengefügt. Beispielsweise enthält ein Farbrad für Projektionsanwendungen typischerweise rote, blaue, grüne und vollständig transparente Kreisringteile mit, entsprechend der Farbgewichtung unterschiedlichen Zentriwinkeln. Bei der erfindungsgemäßen Modifikation der Kreisringteile entstehen dann unterschiedlich lange Fortsätze der radialen Kreisringkanten, d.h. im Vergleich zum benachbarten Kreisringteil stehen diese unter Umständen spitz über oder sind zurückgenommen. Ein solches Überstehen macht das Farbrad anfällig gegenüber mechanischer Beanspruchung.

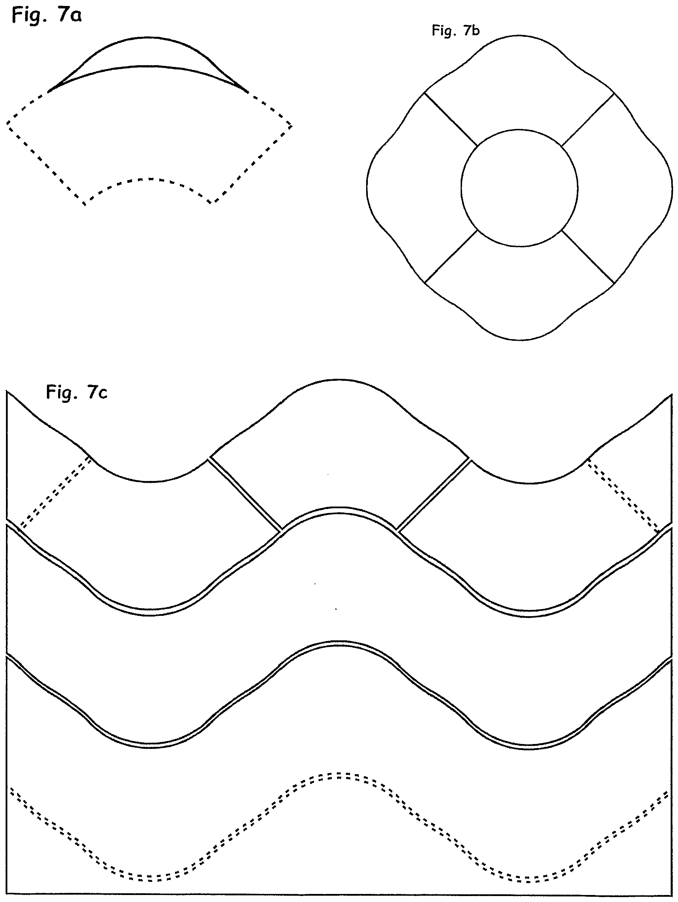

Um dies zu vermeiden wird in einer weiteren Ausführungsform der vorliegenden Erfindung die radiale Kreisringteilkante beibehalten und lediglich die Krümmung des äußeren Kreisbogenteils modifiziert. Figur 7a zeigt ein solches modifiziertes Kreisringteil, wobei hier beispielhaft eine Version gewählt wurde bei der die innere Kreisbogenkante tatsächlich noch einen Kreis bildet, wenn solche Kreisringteile zu einem Farbrad zusammengesetzt werden wie Figur 7b zeigt. Figur 7c zeigt schematisch in verschiedenen Ebenen die einzelnen Schritte der Vereinzelung.

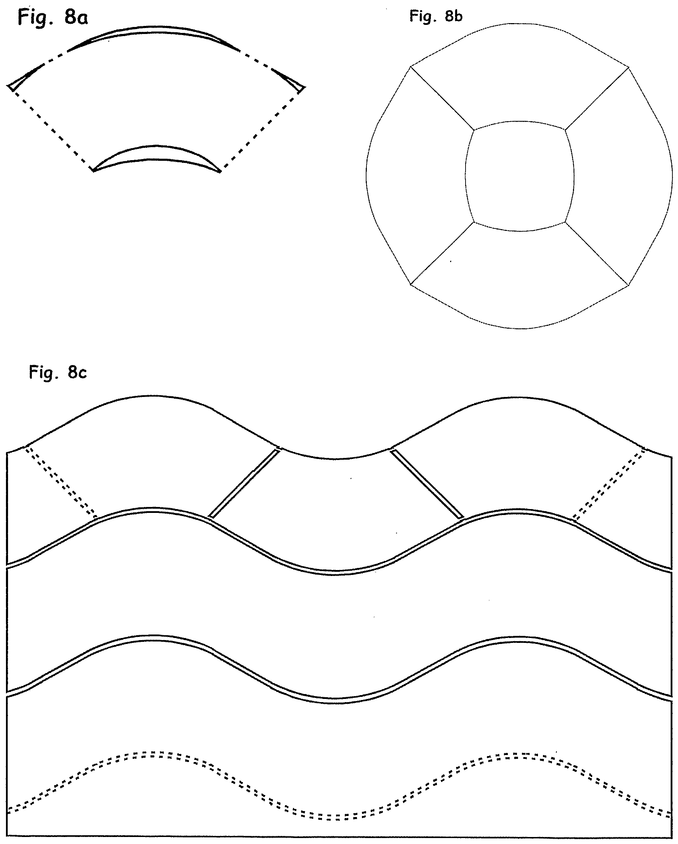

Beim Farbrad gemäß der Ausführungsform nach Figur 7 entsteht der Eindruck, dass dieses doch sehr stark von der ursprünglichen Radgeometrie abweicht. Es sei aber darauf hingewiesen, dass dies lediglich beispielhaft zu verstehen ist und sich Ausführungsformen gemäß Figur 6 und Figur 7 durchaus kombinieren lassen um für alle Kreisringteile dieselbe Länge der radialen Kanten zu verwirklichen, ohne dass zu sehr von der Radgeometrie abgewichen wird. Ein solches Beispiel ist in Figur 8 dargestellt. Figur 8a zeigt das entsprechend modifizierte Kreisringteil, wobei die im Vergleich zum ursprünglichen Kreisringteil hinzugekommenen Flächen mit durchgezogener Linie umrandet sind. In Figur 8b ist ein aus solchen Kreisringteilen zusammengesetztes Farbrad schematisch dargestellt und Figur 8c zeigt in unterschiedlichen Ebenen die einzelnen Vereinzelungsschritte.

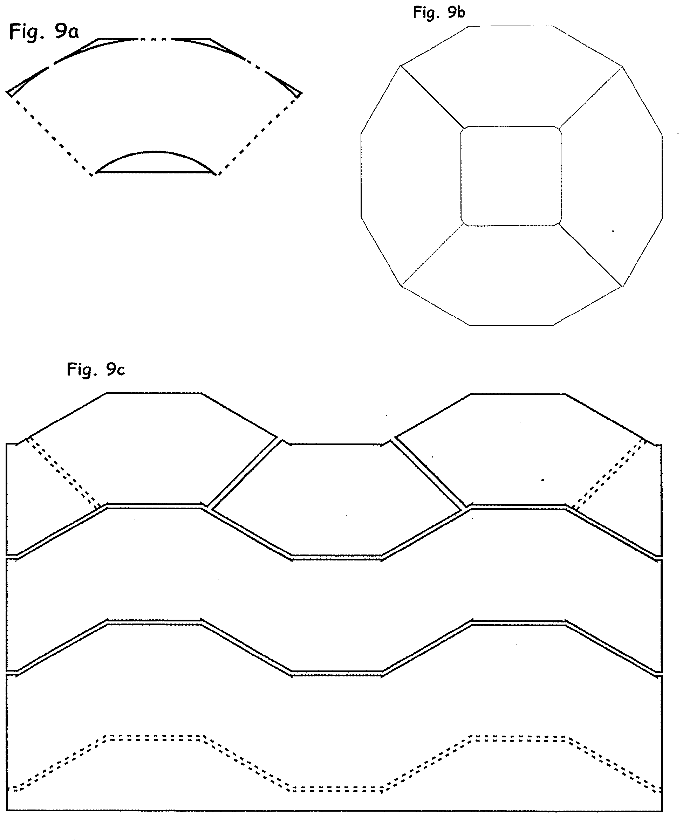

Die bisher beschriebenen Bruchkanten enthalten alle mehr oder weniger gekrümmte Geometrien. Bei manchen Vereinzelungsmethoden ist es allerdings recht schwierig solche gekrümmten Kanten zu realisieren. Insbesondere wenn eine Vereinzelungsmethode automatisiert werden soll, kann eine insbesondere von der Kreisbogenform abweichende Bruchkante eine große technische Schwierigkeit darstellen. Die erfindungsgemäße Modifizierung der Kreisringteile erlaubt es, falls dies die Anwendung zulässt zu Bruchkanten ausschliesslich mit linearen Teilabschnitten überzugehen. Die Figur 9 zeigt eine solche Ausführungsform. Figur 9a zeigt ein modifiziertes Kreisringteil, Figur 9b ein aus solchen Kreisringteilen zusammengesetztes Rad und die Figur 9c zeigt in verschiedenen Ebenen die einzelnen Schritte der Vereinzelung.

In manchen Anwendungen spielt die äussere Form des Rades dennoch eine Rolle, wenn auch keine optische. Beispielsweise dreht sich das Farbrad in der Anwendung mit mehr als 80 Hz, typischerweise ca 120 Hz. Es ist zu erwarten, dass die Abweichung von der Kreisform zu Luftschwingungen führt, was eventuell zu Geräuschen führt. Um dem entgegenzuwirken gibt es die Möglichkeit das Rad in einen Kreisrunden äußeren Rahmen einzubetten, der ausserdem dazu geeignet ist, die Kreisringteile zusätzlich gegenüber den Zentrifugalkräften zu stabilisieren.

## Patentansprüche

1. Verfahren zur Herstellung von standardmässigen Kreisringteilen (3) für Farbradsegmente für Farbräder in Projektionsapparaten aus einem dichroitischen plattenförmigen Substrat mit folgenden Schritten:
- Anordnung von vorgesehenen Sollbruchkanten derart, dass die später zu vereinzelnden Kreisringteile in Kolonnen vorgesehen sind,
wobei innerhalb einer Kolonne die Kreisringteile so zueinander angeordnet sind, dass jeweils zumindest
punktweise die innere Kreisbogenkante (7) eines Kreisringteils die äussere Kreisbogenkante (5) eines anderen Kreisbogenteils berührt und damit ein Stück gemeinsamer Sollbruchkante bildet, und die Orientierung der Krümmung der Kreisringteile benachbarter Kolonnen abwechselt;
- Vereinzelung der Kreisringteile entlang der vorgesehenen Sollbruchkanten.

2. Verfahren nach Anspruch 1, **dadurch gekennzeichnet, dass** Teile der radialen Bruchkanten benachbarter Kolonnen gemeinsame Sollbruchkanten bilden.

3. Verfahren nach Anspruch 1, **dadurch gekennzeichnet, dass** die vollständige Sollbruchkante der inneren Kreisbogenkante (7) eines Kreisringteils ein Teil der Sollbruchkante der äusseren Kreisbogenkante {5) eines benachbarten Kreisbogenteils darstellt.

4. Verfahren nach Anspruch 1, **dadurch gekennzeichnet, dass** die innere Kreisbogenkante (7) eines Kreisringteils mit der äusseren Kreisbogenkante (5) eines Kreisringteils einer benachbarten Kolonne eine stetige, einfach zusammenhängende Linie bildet.

5. Verfahren nach Anspruch 4, **dadurch gekennzeichnet, dass** die radialen Kanten (9, 9') eines Kreisringteils einen Zentriwinkel phi einschliessen und die Krümmung der äusseren Kreisbogenkante so modifiziert wird dass die Länge der radialen Kanten sich bei Variation des Zentriwinkels im Wesentlichen nicht ändert.

6. Verfahren nach Anspruch 1, **dadurch gekennzeichnet, dass** die Form der äussere Kreisbogenkante und gegebenenfalls auch der innere Kreisbogenkante so modifiziert wird dass die mehrere Kolonnen vereinzelter modifizierten Kreisringteile zusammen eine Fläche lückenlos bedecken können.

7. Verfahren nach Anspruch 1, **dadurch gekennzeichnet, dass** die innere (7) und die äusseren Kreisbogenkante (5) eines Kreisringteils lineare Teilabschnitte aufweist.

8. Verfahren zur Herstellung eines Farbrades aus Kreisringteilen, dieses Verfahren umfassend die Schritte des Verfahrens nach Anspruch 1, wonach die Kreisringteile entlang der radialen Kante zu einem flächigen Farbrad zusammengefügt werden.

9. Verfahren nach Anspruch 8, bei dem die Kreisringteile in einen Rahmen eingebettet werden.

## Claims

1. A method for the production of standard circular ring portions (3) for color wheel segments for color wheels in projection apparatuses from a dichroic plate-shaped substrate, comprising the following steps of:
separating the circular ring portions along the intended predetermined breaking edges;
arranging intended predetermined breaking edges such that the circular ring portions to be subsequently separated are provided in columns,
wherein, within a column, the circular ring portions are arranged in relation to each other such that the inner circular arc edge (7) of one circular ring portion contacts the outer circular arc edge (5) of another circular arc portion at least at some points, thus forming a piece of a common predetermined breaking edge, and wherein the orientation of the curvature of the circular ring portions of adjacent columns alternates.

2. The method according to claim 1, **characterized in that** portions of the radial fracture edges of adjacent columns form common predetermined breaking edges.

3. The method according to claim 1, **characterized in that** the complete predetermined breaking edge of the inner circular arc edge (7) of a circular ring portion represents a portion of the predetermined breaking edge of the outer circular arc edge (5) of an adjacent circular arc portion.

4. The method according to claim 1, **characterized in that** the inner circular arc edge (7) of a circular ring portion forms a continuous, single continuous line with the outer circular arc edge (5) of a circular ring portion of an adjacent column.

5. The method according to claim 4, **characterized in that** the radial edges (9, 9') of a circular ring portion include a centering angle phi and the curvature of the outer circular arc edge is modified such that the length of the radial edges does not change substantially upon variation of the centering angle.

6. The method according to claim 1, **characterized in that** the shape of the outer arc edge and optionally also the inner arc edge is modified such that said plurality of columns of separated modified circular ring portions can continuously cover a surface together.

7. The method according to claim 1, **characterized in that** the inner (7) and outer circular arc edges (5) of a circular ring portion have linear partial sections.

8. The method for the production of a color wheel from circular ring portions, said method comprising the steps of the method according to claim 1, according to which the circular ring portions are joined to each other along the radial edge to form a planar color wheel.

9. The method according to claim 8, wherein the circular ring portions are embedded in a frame.

## Revendications

1. Procédé de fabrication de pièces annulaires circulaires standard (3) pour des segments de roues colorées pour des roues colorées dans des appareils de projection constitués d'un substrat en forme de plaque dichroïque, comprenant les étapes suivantes :
séparation des pièces annulaires circulaires le long des bords de rupture prédéterminés prévus ;
agencement de bords de rupture prédéterminés prévus de telle sorte que les pièces annulaires circulaires à séparer ultérieurement sont prévues en colonnes,
dans lequel, à l'intérieur d'une colonne, les parties d'anneau circulaire sont disposées l'une par rapport à l'autre de telle sorte que le bord d'arc de cercle intérieur (7) d'une partie d'anneau circulaire touche le bord d'arc de cercle extérieur (5) d'une autre partie d'arc de cercle au moins en certains points et forme ainsi un morceau de bord de rupture commun prédéterminé, et l'orientation de la courbure des parties d'anneau circulaire des colonnes adjacentes alterne.

2. Procédé selon la revendication 1, **caractérisé en ce que** des parties des bords de rupture radiaux de colonnes adjacentes forment des bords de rupture prédéterminés communs.

3. Procédé selon la revendication 1, **caractérisé en ce que** le bord de rupture complet prédéterminé du bord d'arc de cercle intérieur (7) d'une partie d'anneau circulaire représente une partie du bord de rupture prédéterminé du bord d'arc de cercle extérieur (5) d'une partie d'arc de cercle adjacente.

4. Procédé selon la revendication 1, **caractérisé en ce que** le bord d'arc de cercle intérieur (7) d'une partie d'anneau circulaire forme une ligne continue et simplement cohérente avec le bord extérieur de l'arc de cercle (5) d'une partie annulaire circulaire d'une colonne adjacente.

5. Procédé selon la revendication 4, **caractérisé en ce que** les bords radiaux (9, 9') d'une pièce annulaire circulaire comprennent un angle de centrage phi et la courbure du bord extérieur de l'arc de cercle est modifiée de telle sorte que la longueur des bords radiaux ne change pas sensiblement lorsque l'angle de centrage est modifié.

6. Procédé selon la revendication 1, **caractérisé en ce que** la forme du bord extérieur de l'arc de cercle et éventuellement aussi du bord intérieur de l'arc de cercle est modifiée de telle sorte que les plusieurs colonnes de pièces annulaires circulaires modifiées séparées peuvent couvrir ensemble une zone sans espaces.

7. Procédé selon la revendication 1, **caractérisé en ce que** le bord intérieur (7) et le bord extérieur (5) de l'arc de cercle d'une partie annulaire circulaire présente des sections partielles linéaires.

8. Procédé de fabrication d'une roue à couleur à partir de pièces annulaires circulaires, ledit procédé comprenant les étapes du procédé selon la revendication 1, selon lequel les pièces annulaires circulaires sont assemblées le long du bord radial pour former une roue à couleur plane.

9. Procédé selon la revendication 8, dans lequel les pièces annulaires circulaires sont enfoncées dans un cadre.
